# EUROPEAN PATENT APPLICATION

(11) **EP 3 991 907 A1**
(43) Date of publication of application: **04.05.2022**
(21) Application number: 20205116.5
(22) Date of filing: 02.11.2020
(51) Int. Cl.: B23K 26/08, B23K 26/38, B23K 26/382, B23K 26/146, B23K 26/04, B23K 26/03, B23K 103/08, B23K 103/14, B23K 103/18, B23K 103/00

(54) **A METHOD FOR TURNING A WORKPIECE WITH A FLUID-JET GUIDED LASER BEAM**

(71) Applicant: Synova S.A., 1266 Duillier (CH)
(72) Inventor: Moingeon, Jehan, 1020 Renens (CH); Bruckert, Florent, 74140 Sciez-sur-Léman (FR); Diboine, Jérémie, 1020 Renens (CH); Zryd, Amédée, 1026 Denges (CH); Richerzhagen, Bernold, 1025 Saint-Sulpice (CH)
(74) Representative: Roth, Sebastian

(57) **Abstract**

The present disclosure relates to turning a workpiece with a laser beam coupled into a fluid jet, i.e., a fluid-jet guided laser beam. The disclosure respectively provides a method and an apparatus for machining a workpiece (30), wherein the machining comprises turning the workpiece. The method is carried out by the apparatus, which is configured to provide the fluid-jet (11) guided laser beam (12). The method comprises turning (21) the workpiece, wherein turning the workpiece (30) comprises: rotating the workpiece around an axis of rotation during the machining; and providing the fluid-jet guided laser beam to a machined surface of the workpiece.

## Description

### TECHNICAL FIELD

The present disclosure relates to the field of machining workpieces, specifically machining workpieces by turning. In particular, the disclosure relates to turning workpieces with a laser beam coupled into a fluid jet, i.e., with a fluid-jet guided laser beam. The disclosure respectively provides a method and an apparatus for machining a workpiece, wherein the machining comprises turning the workpiece. The method may be carried out by the apparatus, and the apparatus is configured to provide the fluid-jet guided laser beam.

### BACKGROUND

Turning is a process of machining a workpiece, which comprises, for instance, using a cutting tool to cut into the workpiece, while the workpiece rotates. The cutting tool may thereby be moved linearly while the workpiece rotates, such that, for instance, the cutting tool describes a helix path on the workpiece surface. That is, conventional turning of a workpiece comprises rotating the workpiece around an axis of rotation, and at the same time machining the workpiece, for instance, cutting it with the cutting tool. The speed of turning the workpiece is determined by the rotational speed of rotating the workpiece. A conventional cutting tool may be a conventional laser.

The conventional turning has several disadvantages. For instance, not all materials can be easily turned in the conventional way, i.e., by using a conventional cutting tool. Some materials, like diamonds or superalloys, may be too hard for the cutting tool, while other materials, like PHYNOX or MAGIC GOLD, may be too brittle or too sensitive to the heat that is produced by the cutting tool during the turning of the workpiece. Furthermore, there are usually limitations to the workpiece size, which is still feasible for tuning the workpiece. Specifically, high aspect ratio workpieces are difficult to machine with conventional turning. Further, larger workpieces (with a larger volume and/or diameter) may be quite difficult to machine by turning w with a conventional laser. Finally, a surface roughness of a machined surface of the turned workpiece is often not satisfactory after conventional turning, i.e., the surface is often too rough and requires further processing steps like polishing.

Another drawback of the conventional turning is that this machining process cannot easily be integrated in a process flow, which also comprises other machining processes of the workpiece, for example, drilling, milling or engraving the workpiece (particularly the turned workpiece).

### SUMMARY OF THE INVENTION

Therefore, embodiments of the invention aim at improving conventional ways of machining a workpiece by turning. An objective is, in particular, to provide a method and an apparatus, respectively, which can turn workpieces of many kinds of materials, even very hard and/or brittle materials and heat sensitive materials. The turning should be full-automatically performed. Further, it should be easy to integrate the turning with one or more other machining processes of the workpiece. The turning should further result in an improved surface roughness of the machined surface of the machined workpiece. In addition, it should be well feasible to perform turning also on larger workpieces. Finally, the time to machine a workpiece of a given precision, quality and shape should be reduced, while also reducing the tool consumption during the machining process. Embodiments of the invention should also allow the machining of new types of workpieces, such as turning of high-aspect ratio grooves into workpieces made of hard, brittle and/or heat-sensitive materials.

These and other objectives are achieved by the embodiments presented in the enclosed independent claims. Advantageous implementations of these embodiments are defined in the dependent claims.

In particular, the embodiments of the invention base generally on the use of an apparatus for implementing a method for machining a workpiece comprising turning the workpiece. The apparatus provides a laser beam that is guided in a fluid jet by internal reflection. This fluid-jet guided laser beam can efficiently turn the workpiece. Thereby, different orientations between the laser beam and the machined surface of the workpiece are possible according to embodiments of the invention. These embodiments enable the turning of even ultra-hard material workpieces and brittle or highly-heat-sensitive material workpieces with a very high precision, in particular, on high aspect ratio or complex geometries.

A first aspect provides a method for machining a workpiece, wherein the method is performed by an apparatus providing a fluid-jet guided laser beam, wherein the method comprises turning the workpiece, and wherein turning the workpiece comprises: rotating the workpiece around an axis of rotation during the machining; and providing the fluid-jet guided laser beam to a machined surface of the workpiece.

The workpiece may be continuously rotated during the turning, in particular during the machining of the workpiece. The fluid-jet guided laser beam enables the turning of workpieces of many kinds of materials, including very hard materials and brittle or very heat sensitive materials. The turning can be performed full-automatically with the apparatus. Improved results of turning the workpiece are achieved with the method of the first aspect compared to a conventional turning method that does not use of a fluid-jet guided laser beam. For instance, in terms of speed, precision, and surface roughness, or accessibility of the fluid jet.

The workpiece may have a regular shape, like a cylindrical shape with a certain diameter. The turning of the workpiece may create one or more cylindrical surfaces of such a workpiece, wherein the one or more cylindrical surfaces have a reduced diameter. Generally, any revolution shape is feasible. The turning may also create one or more surfaces oriented primarily perpendicular to the workpiece axis, which may be referred to as facing by turning. The turning may also create one or more grooves in the outer surface of the workpiece, i.e. grooves circumferential with respect to the workpiece diameter, which may be referred to as grooving by turning. The turning may also create one or more groves in an end surface of the workpiece, i.e., grooves around the axis of rotation, which may be referred to as boring. The workpiece may also have an irregular shape, e.g. with a steplessly varying radius along the axis of rotation, or with a helix shape. A raw workpiece of an irregular shape may be pre-processed into a workpiece having a more regular shape, e.g., by facetting as described further below.

In an implementation of the method, the fluid-jet guided laser beam is provided perpendicular onto the machined surface, or tangential to the machined surface, or substantially tangential to the machined surface.

Accordingly, different orientations between the laser beam and the machined surface are possible, which enables different application scenarios. For example, the perpendicular orientation may result in a higher material removal rate and may thus be beneficial for machining larger workpieces, while the tangential orientation may allow higher precision, higher surface quality and less stress in the workpiece. The tangential case may comprise that a nozzle axis (of a fluid-generation nozzle for generating the fluid jet in the apparatus, wherein the nozzle axis is aligned with a propagation direction of the fluid jet) touches the machined surface of the workpiece. Notably, any angle between the laser beam and the machined surface may be achieved, if a 6-axes apparatus is used.

In an implementation of the method, the axis of rotation is perpendicular to a propagation direction of the fluid-jet guided laser beam as provided by the apparatus.

In an implementation, the method further comprises moving the fluid-jet guided laser beam along a movement direction during turning the workpiece.

Accordingly, the laser beam may move along a determined path on the workpiece surface, for instance, it may describe a helix path. Different shapes of the turned workpiece can thus be realized. In particular, the laser beam may be moved by relatively displacing the workpiece and the laser beam against one another. That means, also the workpiece may be moved, or the workpiece and the laser beam may be moved, to realize the effective movement of the laser beam. It may be possible to linearly displace the laser beam and/or the workpiece along two or three axes at the same time or subsequently. Further, it may be possible to rotate the workpiece around two or three different axes of rotation during the machining. A rotation of the workpiece around one or more axes of rotation may be synchronized with a linear displacement of the workpiece and/or the laser beam along one or more axes.

The fluid jet may accordingly move over the workpiece. In an embodiment, the fluid jet may perform a multi-pass motion over the workpiece. The multi-pass motion may be (predominantly) effected by the rotation of the workpiece.

In an implementation of the method, the movement direction is parallel or perpendicular to the axis of rotation, and is perpendicular to the propagation direction of the fluid-jet guided laser beam.

In an implementation of the method, the axis of rotation is parallel to the fluid-jet guided laser beam.

In an implementation of the method, the laser beam is pulsed; and a rotational speed of rotating the workpiece around the axis of rotation is set such that consecutive pulses of the pulsed laser beam overlap each other by at least 50% on the machined surface of the workpiece.

That means, the laser beam may describe a continuous path on the machined surface of the workpiece. The 50% or more overlap of the laser pulses result in an efficient machining of the workpiece, and particularly in a low surface roughness of the machined surface of the machined workpiece.

In an implementation, the method further comprises facetting the workpiece, before turning the workpiece; wherein facetting the workpiece comprises cutting off a set of pieces from the workpiece with the fluid-jet guided laser beam, to reduce a diameter of the workpiece with respect to the axis of rotation.

The facetting may help to quickly reduce the size of larger workpieces, in order to speed up the overall process of machining the workpiece including the turning. The facetting may particularly reduce a diameter of the workpiece, while enabling the subsequent turning process to be carried out efficiently and with high precision.

Notably, a diameter of the workpiece may vary along the workpiece (e.g., along the main axis of rotation for turning). One may cut such a workpiece to a controlled shape by performing the facetting before the turning, thus allowing better turning results afterwards. Further, the facetting may allow obtaining various shapes of the machined workpiece, for instance, shapes including spheres or half-spheres.

In an implementation, of the method, cutting off a piece from the workpiece comprises: cutting into the workpiece with the fluid-jet guided laser beam; rotating the workpiece by a certain angle around the axis of rotation; and cutting again into the workpiece with the fluid-jet guided laser beam, to cut out the piece from the workpiece.

The first cutting into the workpiece may comprise cutting partially into the workpiece thickness. Notably, one or more pieces of the workpiece could each also be cut out/off from the workpiece with one cut, instead to two cuts with rotating the workpiece in between the two cuts.

In an implementation of the method, facetting the workpiece comprises: cutting off a first subset of pieces from the workpiece, wherein the certain angle is a larger angle, to reduce the diameter of the workpiece with respect to the axis of rotation; and cutting off a second subset of pieces from the workpiece, wherein the certain angle is a smaller angle, to further reduce the diameter of the workpiece with respect to the axis of rotation.

In this way, facetting with the larger angle provide a rough workpiece shape, but a fast facetting process, while the subsequent facetting with the smaller angle allows reducing the workpiece shape to be smoother. Overall this results in a reduction of the process time.

In an implementation of the method, the method further comprises performing an optimization algorithm based on a size and/or a shape of the workpiece and regarding to a surface finish of the machined workpiece and/or a process time of machining the workpiece; and performing the facetting and the turning of the workpiece based on a result of the optimization algorithm.

The algorithm may select the facetting strategy, i.e., how to facet the workpiece. Constraints taken into account by the algorithm may comprise a maximum diameter or volume of the workpiece (typically, before facetting) and a minimum diameter or volume of the workpiece (typically, as desired after the subsequent turning). The algorithm may particularly determine at least one of: how many pieces to cut off from the workpiece, how many facets to create, what certain angle to use in the facetting, whether to cut off a first subset of pieces and a second subset of pieces as described above, a difference between the first and the second certain angle, from which side to cut into the workpiece (e.g., determined for each cut), what laser power to use per each cut, how far and fast to turn the workpiece after the facetting.

In an implementation of the method, a material of the workpiece comprises at least one of: diamond; a diamond composite; polycrystalline diamond; polycrystalline boron nitride; silicon carbide; a super-alloy; a ceramic; PHYNOX; titanium; a titanium alloy; a cobalt alloy; composite materials containing the previously mentioned materials.

Accordingly, workpieces of many kinds of materials can be turned, even (very) hard materials and (very) brittle or heat sensitive materials, or compliant and/or soft materials.

In an implementation, the method further comprises, in addition to turning the workpiece, at least one of: straight deep cutting into the workpiece, drilling the workpiece, engraving the workpiece, and laser milling the workpiece, with the fluid-jet guided laser beam.

In an implementation of the method, the method is performed automatically and/or seamlessly by the apparatus; and/or the method is performed by the apparatus in a single process.

In an implementation of the method, an arithmetic average roughness of the machined surface of the machined workpiece is 0.4 µm or less.

In particular, the arithmetic average roughness may be 0.2 µm or less. In an implementation of the method, a diameter of the workpiece is larger than 30 mm. For instance, the diameter of the workpiece may be 125 mm or larger.

Accordingly, it is well feasible to perform turning also on larger workpieces (larger diameter and/or volume) with the method of the first aspect, especially in the case of tangential incidence, compared to turning with a laser without a fluid jet. Notably, a workpiece may have the regular shape of a cylinder, or of a sphere, or the like, for instance, having a constant and well defined diameter. However, a workpiece may also have an irregular shape and/or a diameter varying along an axis of turning. The diameter in this case may refer to the largest diameter measurable for the workpiece. The diameter may measure a distance from one workpiece surface (e.g., the machined surface) to the opposite workpiece surface. A diameter of a workpiece may be as commonly understood by the skilled person in this technical field.

A second aspect provides an apparatus for machining a workpiece, the apparatus comprising: a machining unit configured to provide a fluid-jet guided laser beam; a holder configured to hold and rotate the workpiece; and a control unit configured to control the machining unit and the holder, respectively, to turn the workpiece and for turning the workpiece to: rotate the workpiece around an axis of rotation during the machining; and provide the fluid-jet guided laser beam to a machined surface of the workpiece.

In an implementation of the apparatus, the apparatus is configured to rotate the holder to rotate the workpiece around two or three different axes of rotation, and to linearly displace the workpiece along two or three axes; and/or the control unit is configured to control the holder to synchronize a rotation of the workpiece around one or more axes of rotation with a linear displacement of the workpiece along one or more axes.

The apparatus of the second aspect provide all advantages described above for the method of the first aspect, and can be implemented likewise. That is, in implementation forms of the apparatus, the apparatus maybe configured according to the implementation forms of the method described above.

The apparatus particularly allows machining a workpiece, including turning the workpiece and optionally comprising further processing the workpiece, seamlessly and/or automatically and/or in a single process.

A third aspect provides a computer program comprising a program code either for controlling the apparatus according to the second aspect when being performed by a processor, in particular a processor of the control unit, or for performing the method according to the first aspect.

A fourth aspect of the present disclosure provides a non-transitory storage medium storing executable program code which, when executed by a processor, causes the method according to the first aspect or any implementation thereof to be performed.

### BRIEF DESCRIPTION OF DRAWINGS

The above-described aspects and implementations defining general embodiments according to the invention are explained in the following description of specific embodiments in relation to the enclosed drawings, in which
- FIG. 1: illustrates a method according to an embodiment of the invention, and schematically an apparatus according to an embodiment of the invention, which performs the method.
- FIG. 2: shows a schematic flow diagram of a method according to an embodiment of the invention.
- FIG. 3: shows different examples of a method according to an embodiment of the invention, in particular, shows how the fluid-jet guided laser beam can be provided onto the machined surface.
- FIG. 4: shows different examples of a method according to an embodiment of the invention, in particular, shows how the fluid-jet guided laser beam can be moved during the turning of the workpiece.
- FIG. 5: shows different examples of a method according to an embodiment of the invention, in particular, shows how the fluid-jet guided laser beam can be provided onto the machined surface.
- FIG. 6: shows different examples of a method according to an embodiment of the invention, in particular, shows how the fluid-jet guided laser beam can be provided onto the machined surface.
- FIG. 7: shows examples of a method according to an embodiment of the invention, in particular, for workpieces with a varying diameter.
- FIG. 8: shows a method according to an embodiment of the invention, wherein the method includes facetting the workpiece before turning the workpiece.
- FIG. 9: shows various facetting strategies for a method according to an embodiment of the invention, wherein the method includes facetting the workpiece before turning the workpiece.
- FIG. 10: shows an exemplary apparatus according to an embodiment of the invention.

### DETAILED DESCRIPTION OF EMBODIMENTS

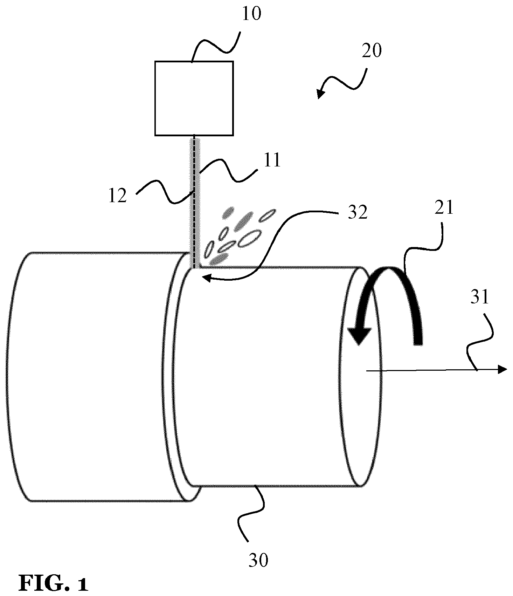

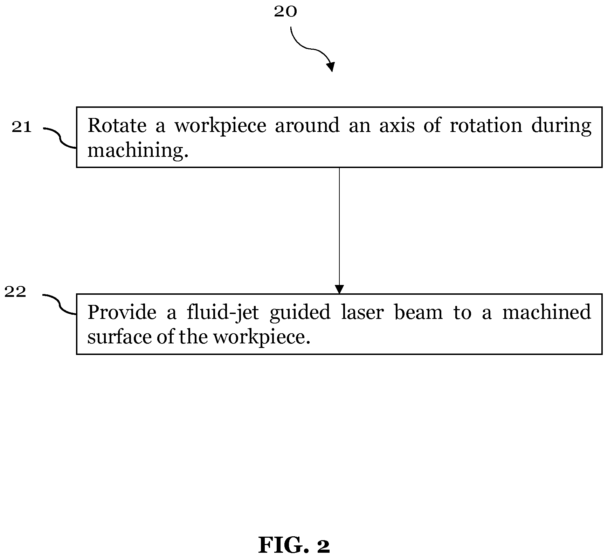

FIG. 1 shows schematically a method 20 according to an embodiment of the invention. Steps of the method 20 are additionally shown in a flow-diagram in FIG. 2. The method 20 is suitable for machining a workpiece 30, wherein the method 20 comprises turning the workpiece 30 with a fluid-jet 11 guided laser beam 12.

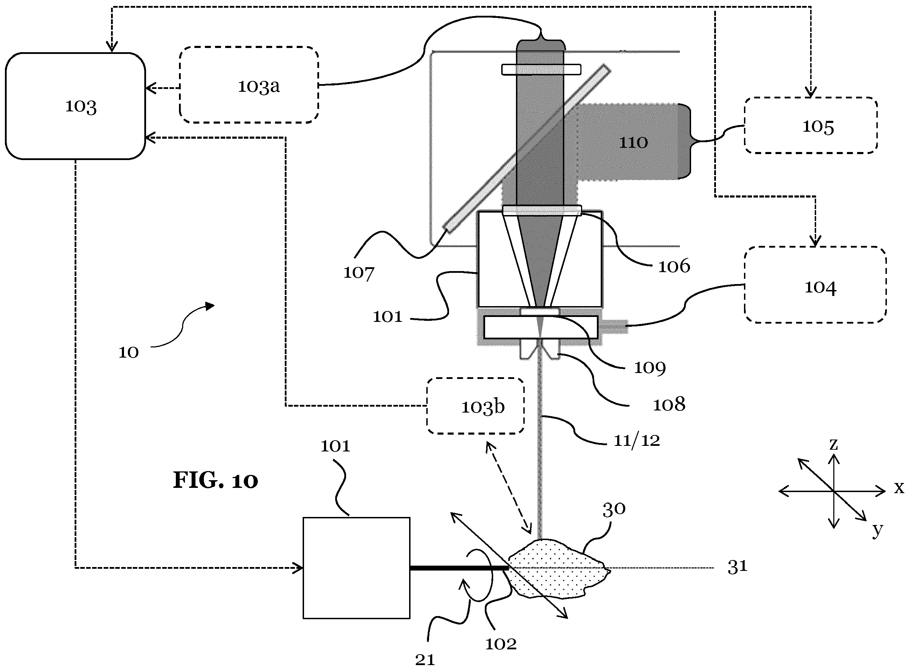

The method 20 is carried out by an apparatus 10 according to an embodiment of the invention, as is also illustrated schematically in FIG. 1, or as is shown including more, optional details in FIG. 10. The apparatus 10 is configured to provide the laser beam 12 coupled into the (pressurized) fluid jet 11, i.e., to provide the fluid-jet 11 guided laser beam 12 onto the workpiece 30. The fluid jet 11 may thereby comprise a liquid jet, particularly, it may comprise a water jet.

A material of the workpiece 30 may comprise at least one of: diamond, a diamond composite, polycrystalline diamond, polycrystalline boron nitride, silicon carbide, a super-alloy, a ceramic, PHYNOX, MAGIC GOLD, titanium, a titanium alloy, a cobalt alloy, one or more composite materials containing the previously mentioned materials. The workpiece 30 may have any volume or diameter. In particular, the workpiece may have a diameter that is larger than 20 mm, larger than 30 mm, or even larger than 50 mm, or even larger than 100 mm, or even larger than 125 mm.

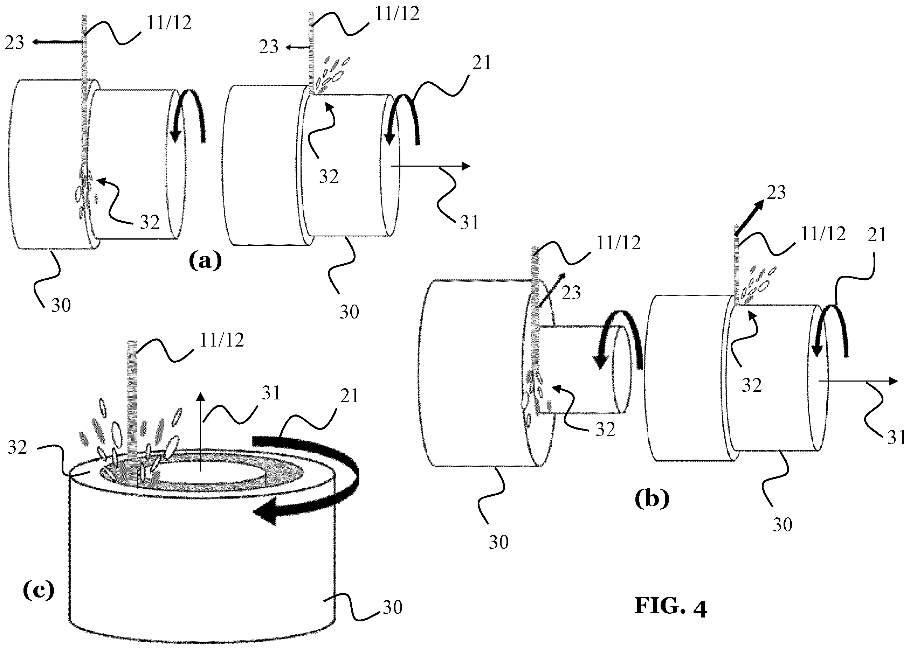

The method 20 comprises turning 21, 22 the workpiece 30. The turning 21, 22 of the workpiece 30 comprises a step of rotating 21 the workpiece 30 around an axis of rotation 31 during the machining. The workpiece 30 may be rotated continuously around the axis of rotation 31 during the turning 21, 22 of the workpiece 30. The workpiece 30 may additionally be rotated around one or more further axes of rotation during the turning 21, 22 or more generally the machining of the workpiece 30. Further, the turning 21, 22 comprises a step of providing 22 the fluid-jet 11 guided laser beam 12 to a machined surface 32 of the workpiece 30. The fluid-jet 11 guided laser beam 12 may, for example, be provided perpendicular onto the machined surface 32 (as it is exemplarily shown in FIG. 1), or it maybe provided tangential to the machined surface 32, or substantially tangential to the machined surface 32, as will be described further below with respect to, for example, the FIGs. 4-7.

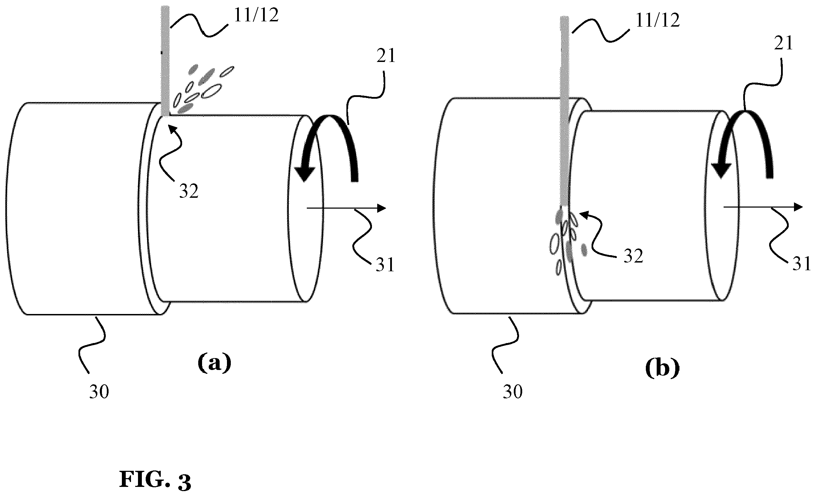

FIG. 3 shows different examples of a method 20 according to an embodiment of the invention, which builds on the embodiment shown in FIG. 1. In particular, FIG. 3 shows in (a) and (b) different example of providing the fluid-jet 11 guided laser beam 12 onto the machined surface 32 of the workpiece 30. Same elements in FIG. 3 and in the FIGs. 1 and 2 are labelled with the same reference signs and are implemented likewise.

In FIG. 3(a) the fluid-jet 11 guided laser beam 12 is provided perpendicular onto the machined surface 32 of the workpiece 30. That means, the propagation direction of the fluid-jet 11 guided laser beam 12 is perpendicular to a plan in which the machined surface 32 lies. In FIG. 3(b), the fluid-jet 11 guided laser beam 12 is provided tangential to the machined surface 32 of the workpiece 30. That means, the propagation direction of the fluid-jet 11 guided laser beam 12 is parallel to the machined surface 32, and touches the machined surface 32. In both cases shown in FIG. 3, the axis of rotation 31, around which the workpiece 30 is at least rotated 21 during the turning 21, 22, is exemplarily perpendicular to the propagation direction of the fluid-jet 11 guided laser beam 12.

A power of the laser beam 12, or a pulse characteristic of the pulsed laser beam 12 (i.e., a pulse width, a pulse rate, a pulse burst-rate, a pulse power, etc.) maybe different for the machining, specifically the turning 21, 22, in the first case, in which the laser beam 12 is provided perpendicular onto the machined surface 32, and in the second case, in which the laser beam 12 is provided tangential to the machined surface 32. The first case may be beneficial for turning 21, 22 a larger workpiece 30 (e.g., with a large volume and/or diameter of e.g. 30 mm or more), since the perpendicular laser beam 12 may result in a higher workpiece material removal rate. The second case may be beneficial for turning 21, 22 workpieces 30 when requiring an improved precision and workpiece surface and when reduced stress in the workpiece 30 is necessary during the machining. Notably, the second case, in which the laser beam 12 is provided tangential to the machined surface 32, is only feasible due to the fact that the laser beam 12 is guided in the fluid jet 11. Such an orientation is not well feasible for a laser beam without fluid jet, because such a laser does not provide a long parallel focus, nor a sufficient coupling of laser power towards the workpiece surface.

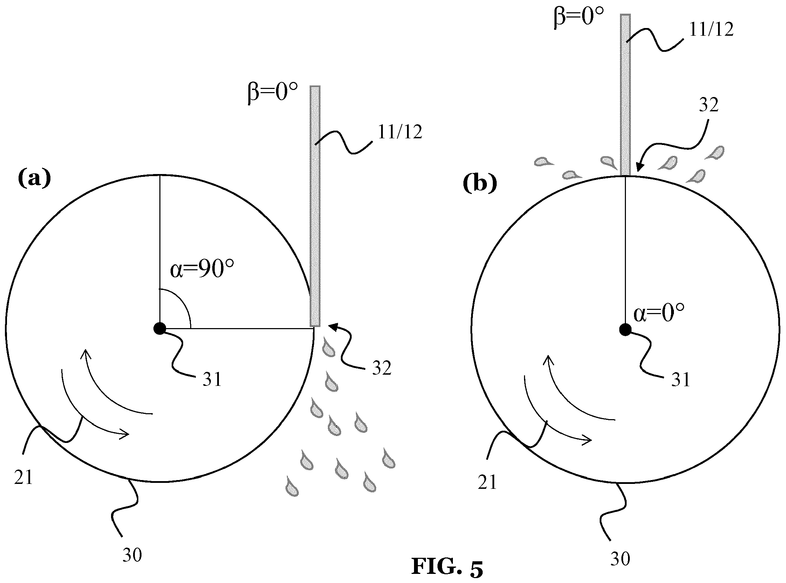

FIGs. 4-7 show different examples of a method 20 according to an embodiment of the invention, which builds on the embodiments shown in FIG. 1 and FIG. 2, respectively. In particular, different examples of providing the fluid-jet 11 guided laser beam 12 onto the machined surface 32 of the workpiece 30 (FIGs. 5-7), and of moving the fluid-jet 11 guided laser beam 12 with respect to the workpiece 30 during the turning 21, 22 of the workpiece 30 (FIG. 4) are shown. Same elements in the FIGs. 4-7 and in the FIGs. 1-3 are labelled with the same reference signs and are implemented likewise.

In particular, FIG. 4 shows in (a) the two orientations of the fluid-jet 11 guided laser beam 12 with respect to the machined surface 32, which have already been shown in FIG. 3. However, FIG. 4(a) shows additionally that the fluid-jet 11 guided laser beam 12 maybe moved parallel to the axis of rotation 31 during the turning 21, 22. Notably, the movement direction indicated in FIG. 4(a) is exemplarily perpendicular to the propagation direction of the laser beam 12. Thereby, as is also shown in FIG. 4(a), for instance, the diameter of a section of the workpiece 30 can be reduced by the turning 21, 22 of the workpiece 30.

FIG. 4 shows further in (b) the two orientations of the fluid-jet 11 guided laser beam 12 with respect to the machined surface 32, which have already been shown in FIG. 3. However, FIG. 4(b) shows additionally that the fluid-jet 11 guided laser beam 12 may be moved perpendicular to the axis of rotation 31 during the turning 21, 22. In contrast to FIG. 4(a), however, in which the laser beam 12 is shown to move perpendicular to a diameter of the workpiece 30, in FIG. 4(b) the laser beam 12 is shown to move in a radial direction of the workpiece 30. The procedure shown in FIG. 4(b) is, in particular, useful for facing and grooving the workpiece 30 by the turning 21, 22.

It is noted that for the machining of the workpiece 30, the movement directions shown in FIG. 4(a) and (b), respectively, can be added to another, or can be carried out at the same time.

FIG. 4 shows further in (c) that the axis of rotation 31 can also be parallel to the propagation direction of the fluid-jet 11 guided laser beam 12. In this case, as is exemplarily shown in FIG. 4(c), the laser beam 12 may cut a circular groove into an end face of the workpiece 30. The laser beam 12 may additionally be moved perpendicular to the axis of rotation 31, for instance, in order to widen the circular groove. The procedure shown in figure 4(c) is, in particular, useful for boring the workpiece 30 by the turning 21, 22. Complex pocketing cinematics can be applied to implement the moving of the laser beam 12.

In each case (a), (b), (c) shown in FIG. 4, it is possible that the workpiece 30 is further rotated around another axis of rotation during the machining, specifically the turning 21, 22, of the workpiece 30, for instance, in order to create more complex shapes of the machined workpiece 30. This can be combined with one or more directions of movement of the laser beam 12 during the machining, specifically the turning 21, 22, of the workpiece 30.

FIG. 5 shows in (a) the previously described case that the fluid-jet 11 guided laser beam 12 is provided tangential to the machined surface 32 of the workpiece 30. Here in FIG. 5(a), the propagation direction of the fluid-jet 11 guided laser beam 12 is perpendicular to the axis of rotation 31 (which runs into the plane of FIG. 5). Furthermore, the fluid-jet 11 guided laser beam 12 propagates along the vertical direction (which runs from top to bottom in FIG. 5(a)), i.e., an angle β between the propagation direction of the laser beam 12 and the vertical direction (or generally a reference direction) is 0°. The laser beam 12 further touches the machined surface 32 tangentially, such that an angle α between a shortest connection (between the axis of rotation 31 and the machined surface 32) and the vertical direction is 90°.

FIG. 5 shows in (b) the previously described case that the fluid-jet 11 guided laser beam 12 is provided perpendicular to the machined surface 32. Here in FIG. 5(b), the propagation direction of the fluid-jet 11 guided laser beam 12 is again perpendicular to the axis of rotation 31. Further, the fluid-jet 11 guided laser beam 12 propagates along the vertical direction (reference direction), so that the angle β is 0°. The angle α is in this case 0°, i.e., a shortest connection (between the axis of rotation 31 and the machined surface 32) is along the vertical direction.

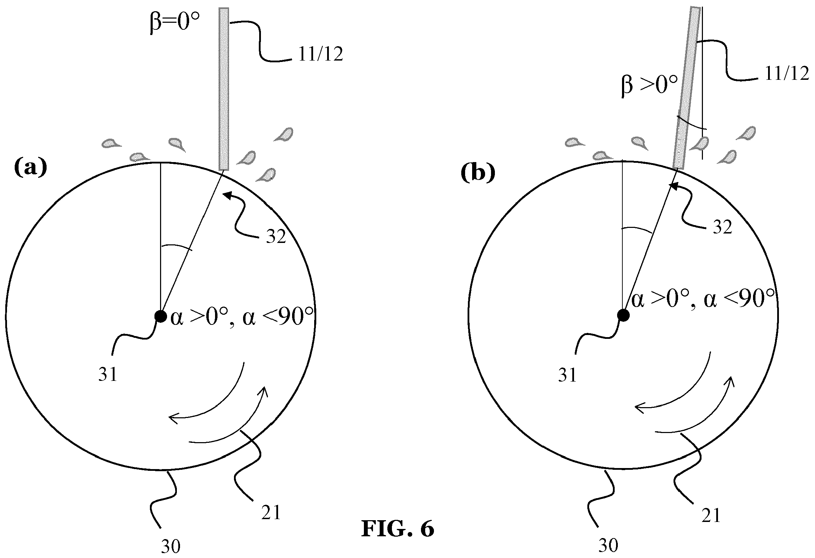

FIG. 6 shows in (a) that different angles (values) for the angle α are possible. For instance, the fluid-jet 11 guided laser beam 12 may be provided along the vertical direction, i.e., the angle β is 0°, but may be provided offset with respect to its position in FIG. 5(b), i.e., the propagation direction of the laser beam 12 does not intersect the axis of rotation 31, such that the angle α may be larger than 0° and smaller than 90°.

FIG. 6 shows further in (b) that different angles (values) for the angle β are also possible. For instance, the fluid-jet 11 guided laser beam 12 may be tilted with respect to the vertical direction, i.e., the angle β may be larger than 0° and smaller than 90°. For instance, the angle β may be equal to the angle α, which is exemplarily larger than 0° and smaller than 90° in FIG. 6(b).

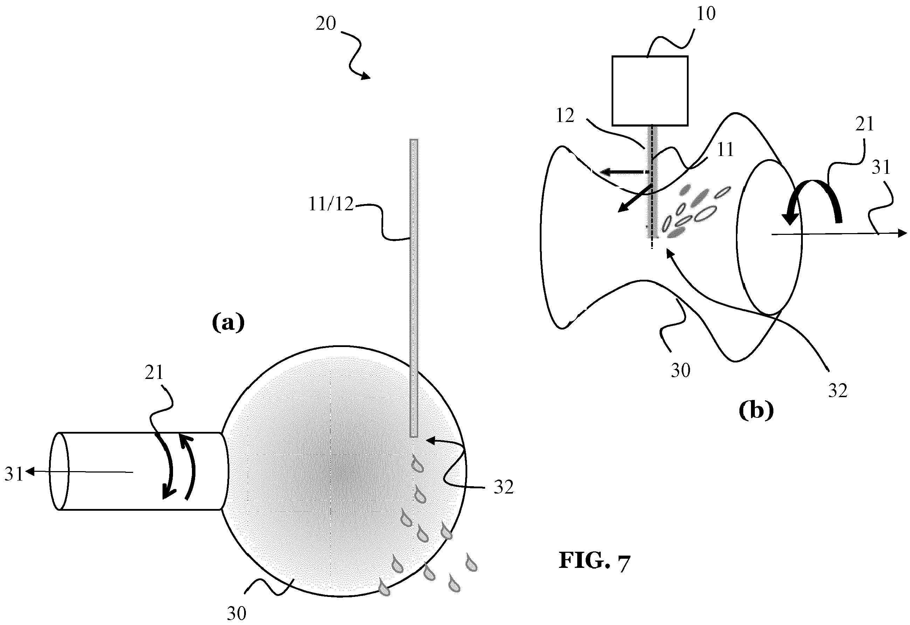

FIG. 7 shows in (a) and (b) other examples, in which the fluid-jet 11 guided laser beam 12 is provided tangential to the machined surface 32 and along the vertical direction (reference direction). Further, the laser beam 12 is provided perpendicular to an axis of rotation 31, around which the workpiece 30 is rotated 21. In particular, the shown procedures may be useful for machining workpieces 30 having a varying workpiece diameter, as illustrated for the workpieces 30 in FIG. 7(a) and FIG. 7(b), respectively.

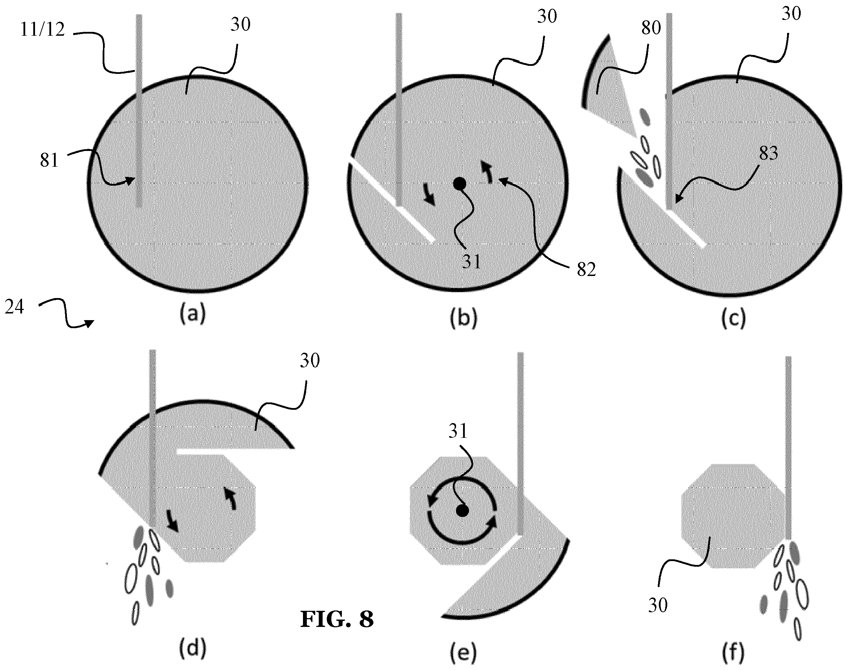

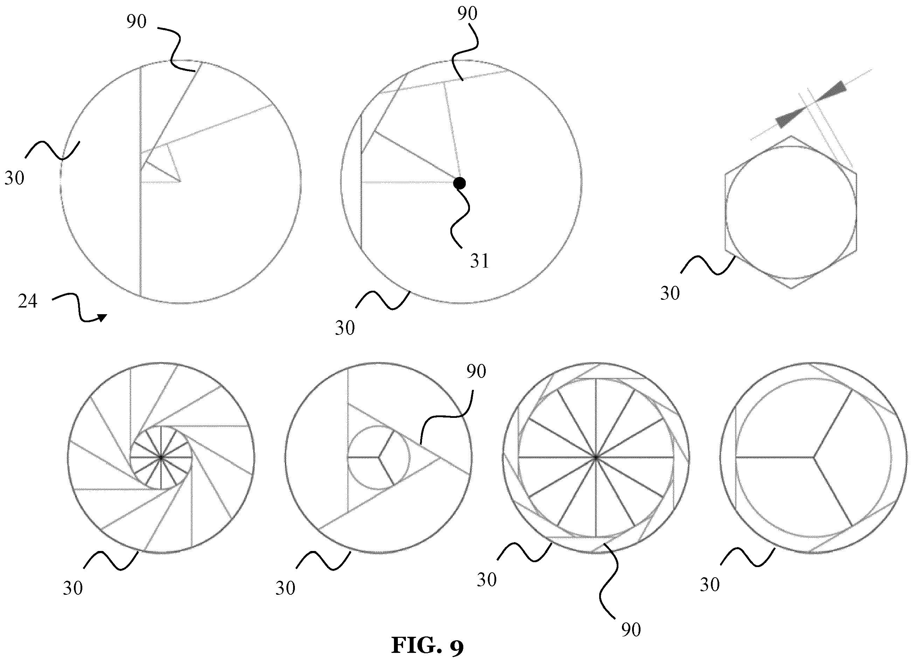

FIG. 8 and FIG. 9 show a method 20 according to an embodiment of the invention which builds on the embodiments shown in FIG. 1 and FIG. 2. In particular, the method 20 may further comprise a step of facetting 24 the workpiece 30, which is illustrated in FIG. 8. The facetting 24 of the workpiece 30 may be performed before the turning 21, 22 of the workpiece 30. The facetting 24 and the turning 21, 22 of the workpiece 30 may be performed by the same apparatus 10, and/or may be performed seamlessly or in one single process. Same elements in the FIGs. 8 and 9 and in the FIGs. 1-7 are labelled with the same reference signs and are implemented likewise.

The facetting 24 of the workpiece 30 may comprises cutting off a set of pieces from the workpiece 30 using the fluid-jet 11 guided laser beam 12, for instance, in order to reduce a diameter of the workpiece 30 (wherein the diameter is perpendicular to the axis of rotation 31). In particular, the facetting 24 may include a step of cutting 81 into the workpiece 30 with the fluid-jet 11 guided laser beam 12, further a subsequent step of rotating 82 the workpiece 30 by a certain angle around the axis of rotation 31, and further another step of cutting again 83 into the workpiece 30 with the fluid-jet guided 11 laser beam 12, in order to cut out a piece from the workpiece 30. In this way, multiple pieces may be cut out from the workpiece 30.

As further shown in FIG. 8, the facetting 24 of the workpiece 30 may comprise performing a first cut 81 (as shown in FIG. 8(a), a complete cut may not be necessary but possible). Further, the workpiece 30 may then be rotated 82 (shown in FIG. 8(b), especially if the first cut 81 did not remove a piece of the workpiece 30 on its own), and shows a further cut 83 (shown in FIG. 8(c), the further cut may intersect the first cut), to eject a cutout, i.e. to remove a piece from the workpiece, 30. This procedure maybe carried out in the same way multiple times (as shown in FIG. 8(d)) such that finally the set of pieces is removed from the workpiece 30 (FIG. 8(f)). The removal of the set of pieces results in a facetting 24 of the workpiece 30, i.e., the workpiece 30 may have a shape with defined facets. In the facetting 24, the last piece cut out from the workpiece 30 (i.e., for the last facet of the workpiece 30 to be created, see FIG. 8(e)) may be cut from the bottom side of the workpiece 30, since a smaller/shorter cut is necessary from this side. The facetted workpiece 30 can then be processed according to the method 20, particularly, by the turning 21, 22.

FIG. 9 shows different examples of efficient facetting strategies that may be applied for a workpiece 30. The workpiece 30 is shown in FIG. 9 in a view along the axis of rotation 31. The grey lines 90, which are drawn in the various workpieces 30, represent cuts that can be performed for the facetting 24 of the respective workpiece 30. It can be understood that different arrangements, orientations and/or sequences of cuts can be performed, to efficiently reduce the workpiece diameter. For some facetting strategies, it can be seen understood based on the indicated cutting lines 90, that in a first step a first subset of pieces can be removed from the workpiece 30, wherein the certain angle may be a larger angle (to reduce the diameter of the workpiece 30 with respect to the axis of rotation 31), and then in a second step a second subset of pieces is removed from the workpiece 30, wherein the certain angle is a smaller angle (to further reduce the diameter of the workpiece 30 with respect to the axis of rotation 31). Thus, the workpiece 30 can be facetted more roughly in the first step (roughing), and can then be facetted finer in the second step (finishing). The same is possible vice versa, i.e., a first step with a smaller certain angle can be carried out, and then a second step with a larger second angle. Thus, an even higher precision is achievable.

The facetting strategy for the workpiece 30 to be machined by the method 20 can be determined by an algorithm. For example, an optimization algorithm may be performed, for example, based on a size (e.g., a volume and/or diameter) and/or a shape of the workpiece 30, and/or regarding to a surface finish of the machined workpiece 30, and/or based on a process time of machining the workpiece 30. Then, the facetting 24 (and also the subsequent turning 21, 22) of the workpiece 30 can be performed based on a result of the optimization algorithm. The result may comprise the cutting lines 90, particularly a sequence of cuts represented by such cutting lines 90.

In an example, a constraint for determining the best facetting strategy of the workpiece may be a maximum radius (e.g., the starting radius or diameter of the workpiece 30, i.e. before facetting 24), and a minimum radius (e.g., the desired final radius or diameter of the workpiece 30 after facetting 24). A further constraint may be a minimum defects size post process for the workpiece 30. An algorithm for determining the facetting strategy for the workpiece 30 may then provide, as an output result, a number of facets that the workpiece 30 should have after the facetting 24 and/or a most efficient processing order of cutting off pieces from the workpiece 30, i.e. of cutting facets into the workpiece 30. Further, for the facetting 24, a maximum volume of material to be reduced, and a maximum length of each cut may be taken into account by the algorithm. The final shape of the workpiece 30 may notably be a polygon, e.g., with an offset with true geometry. The algorithm may be performed by the apparatus 10, and the apparatus 10 may directly use the results of the algorithm to perform the facetting 24 and then the turning, for example, in one run.

The turning 21, 22, with or without facetting 24, may be combined with one or more further process steps, for instance, with at least one process step comprising straight deep cutting into the workpiece 30, drilling the workpiece 30, engraving the workpiece number 30, and laser milling the workpiece 30, with the fluid jet 11 guided laser beam 12. The apparatus 10 may, in addition to the facetting 24 and turning 21, 22, may also carry out the further process steps.

In all embodiments, the method 20 may be performed automatically, and/or seamlessly, and/or in a single process, by the apparatus 10 described in the following with respect to FIG. 10.

FIG. 10 shows an apparatus 10 according to an embodiment of the invention. The apparatus 10 is configured to machine the workpiece 30, as shown in FIG. 1 or FIG. 2, i.e., it maybe the apparatus 10 used in the method 20. The apparatus 10 comprises at least a machining unit 101, a holder 102, and a control unit 103. The apparatus 10 may further comprise an optical sensor 103a, a distance sensor 103b, and further optionally other elements and units described below (and indicated with dashed boxes).

The machining unit 101 is configured to provide a laser beam 12 coupled into a pressurized fluid jet 11. The control unit 103 is configured to control the machining unit 101 and the holder 102. In particular, the control unit 103 may control the holder 102 to rotate 21 the workpiece 30 around an axis of rotation 31. Further, the control unit 103 may control the machining unit 101 to provide 22 the fluid-jet 11 guided laser beam 12 to a machined surface 32 of the workpiece 30, particularly while the workpiece 30 is rotated 21. These actions may implement the method 20 according to an embodiment of the invention as shown in FIG. 1 and FIG. 2.

The optional optical sensor 103a may be configured to determine, during the machining of the workpiece 30, a state of machining the workpiece 30. For instance, it may determine whether the laser beam 12 has broken through the workpiece 30, or is about to break through the workpiece 30, or has not broken through the workpiece 30 (for instance, in case that a piece of the workpiece 30 is cut out during the facetting 24). In this case, the current machining step can be immediately stopped and the apparatus 10 can move on to the next machining step. The distance sensor 103b may be configured to measure a distance between the machining unit 101 and the machined surface 32 of the workpiece 30, for instance, during the turning 21, 22. The apparatus 10 may thus determine how much material has been removed from the workpiece during the turning 21, 22. The distance sensor 103b may be further configured to measure a surface orientation of the machined surface 32 of the workpiece 30. The control unit 103 may then, for instance, determine how to provide the fluid-jet 11 guided laser beam 12 onto the machined surface 32 based on the measured surface orientation, in order to enable the most efficient turning 21, 22 of the workpiece 30.

The machining unit 101 may couple the laser beam 12 - e.g., as received from a laser source 105, which may optionally be a part of the apparatus 10, or e.g. from multiple laser sources 105 - into the fluid jet 11. This coupling may be done in the machining unit 101. The machining unit 101 may particularly include an optical element, like at least one lens 106, for coupling the laser beam 12 into the fluid jet 11. The laser beam 12 may be produced outside of the machining unit 101, and may be injected into the machining unit 101. In the machining unit 101, a mirror, and/or a beam splitter 107, and/or another optical element, may guide the laser beam 12 towards e.g. the at least one lens 106. The beam splitter 107 may also be used to couple part of the laser light, or electromagnetic radiation coming from the workpiece 30, to the optical sensor 103a. The machining unit 101 may also include an optically transparent protection window 109, in order to separate the optical arrangement, here exemplarily the optical element 106, from the fluid circuitry (e.g., water circuitry), and from the region of the machining unit 101 where the fluid jet 11 is produced.

For producing the fluid jet 11, the machining unit 101 may include a fluid jet generation nozzle 108 having an aperture of a certain size. The fluid jet generation nozzle 108 may be disposed within the machining unit 101 to produce the fluid jet 11 in a protected environment. The aperture may define the width of the fluid jet 11. The aperture may have, for example, a diameter of 10-200 µm, and the fluid jet 11 may have, for example, a diameter of about 0.6-1 times the aperture diameter. The pressure for the pressurized fluid jet 11 maybe provided via an external fluid supply 104, which is typically not part of the apparatus 10 (but can be). For instance, the pressure is between 50-800 bar. For outputting the fluid jet 11 from the apparatus 10, the machining unit 101 may include an exit nozzle with an exit aperture. The exit aperture is particularly wider than the fluid nozzle aperture.

The control unit 103 may further control the at least one laser source 105 (e.g., it may command a laser controller of the laser source 105). That is, the control unit 103 may instruct a laser controller of the laser source 105 to output an according laser emission. The laser controller of the laser source 105 may thereby be able to set a constant or pulsed laser beam, for the latter particularly to set a pulse power, pulse width, pulse repetition rate, pulse burst rate, or a pause between pulses according to the instructions of the control unit. For instance, for the turning 21, 22, pulse intensity of the laser beam 12 may in a range of 0.4-2GW/cm², and/or an average power of the laser beam 12 may be in a range of 20-300W, and a pulse length of the laser beam 12 maybe in a range of 150-400ns. The control unit 103 may also control the fluid supply 104.

During the turning 21, 22, the workpiece 30 may be held by the holder 102. The apparatus 10 can be arranged such that it is able to machine the workpiece 30 held by the holder 102. The holder 102 maybe attached to a rotatable element of the apparatus 10, or may itself be rotatable element of the apparatus 10. The apparatus 10, in particular the control unit 103, may thereby control movements of the holder 102 in up to three dimensions (e.g. in x-y-z as indicated in FIG. 10, wherein the z-direction is parallel to the fluid jet 11, and the x- and y-directions are perpendicular to the z-direction and to each other). The holder 102 may be rotated by the apparatus 10, for instance, by rotating the rotatable element. The apparatus 10 is then, in particular, able to turn 21, 22 the workpiece 30 by moving 23 the fluid jet 11 guided laser beam 12 as described above while rotating 21 the holder 102. Thereby, multi-pass movement may be performed, i.e. the laser beam 12 maybe moved more than once along the same path over the workpiece 30. Further, the movement of the laser beam 12 may be continuous or stepwise, and a speed of the movement of the laser beam 12 may be selected/changed. Notably, the movement of the laser beam 12 is relative to the workpiece 30, so that also the workpiece 30 (e.g., provided on a movable workpiece holder) may be moved.

The rotation of the holder 102 may be driven by a motor or CNC. For instance, the holder 102 may comprise a rod or a so-called "Dop". The holder 102 may be at least 10% smaller, particularly at least 20% smaller (in diameter/width), than the workpiece 30 diameter. The holder 102 may rotate around the axis of rotation 31 (indicated in FIG. 10). The rotation of the holder 102 may be controlled by the control unit 103, particularly based on an input from the optical sensor 103a.

The optical sensor 103a may be arranged to receive a laser-induced electromagnetic radiation that propagates away from the workpiece 30 (e.g., while cutting the workpiece 30 11 with the laser beam 12), e.g., through the fluid jet 11 and further through at least one optical element 106, 107 towards the optical sensor 103a. The optical sensor 103a may in particular be arranged to receive the laser-induced electromagnetic radiation through the fluid jet 11 and through the at least one optical element 106, which is configured to couple the laser beam 12 into the fluid jet 11. The laser-induced electromagnetic radiation may include secondary radiation emitted from a portion of the workpiece 30 that is cut with the laser beam 12. For instance, the laser-induced electromagnetic radiation may be induced, because the machined surface 32 of the workpiece 30 is transformed into a plasma. This plasma may emit a characteristic radiation, which can be easily isolated on or by the optical sensor 103a. The laser-induced electromagnetic radiation may also include primary laser radiation that is reflected from the workpiece 30. The laser-induced electromagnetic radiation may also include secondary radiation generated by scattering, preferably Raman scattering, of the laser beam 12 in the fluid jet 11.

The distance sensor 103b maybe a second optical sensor (i.e., in addition to the optical sensor 103a) or an ultrasound sensor. In this case, the distance sensor 103b may be arranged to measure optically the distance to the workpiece surface and/or the surface orientation of the workpiece 30, e.g., by measuring light reflected from the workpiece 30. To this end, the distance sensor 103b may also be configured to send light onto the workpiece 30. The distance sensor 103b may also be a touch probe. In this case, it may be arranged such that it can touch the workpiece 30 for performing the surface orientation measurement, or may be configured such that it can move or be moved towards the workpiece 30 to perform the measurement.

The optical sensor 103a and/or the distance sensor 103b may be arranged in the machining unit 101. However, the optical sensor 103a may also be arranged in the laser source 105. In this case, laser-induced radiation may back-propagate from the workpiece 30, and may be guided through the machining unit 101 to the laser source 105, where it is received by the optical sensor 103a. The machining unit 101 can be optically connected to the laser source 105, for instance, by an optical fiber.

Further, the optical sensor 103a may be configured to convert the received radiation into a signal. The control unit 103 may include processing circuitry, which is configured to determine a state of machining/cutting the product 11 based on the signal. The state of machining the workpiece 30 may be, whether the laser beam 12 has broken through the workpiece 30.

The apparatus 10, in particular the control unit 103, may comprise a processor or processing circuitry (not shown) configured to perform, conduct or initiate the various operations of the apparatus 10 described in this disclosure, in particular to perform the method 20. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

The apparatus 10 may further comprise memory circuitry, which stores one or more instruction(s) that can be executed by the processor or by the processing circuitry, in particular under control of the software. For instance, the memory circuitry may comprise a non-transitory storage medium storing executable software code or program code, which, when executed by the processor or the processing circuitry, causes the various operations of the apparatus described in this disclosure, in particular causes the method 20 to be performed.

The present disclosure has been described in conjunction with various embodiments as examples as well as implementation forms. However, other variations can be understood and effected by those persons skilled in the art and practicing the claimed embodiments, from the studies of the drawings, the description and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

The embodiments of the invention have various application scenarios. For instance, the method 20 maybe beneficial in the manufacturing of watches, for instance, because of the low surface roughness achievable, or due to the fluid-jet 11 verticality possible with the apparatus 10, or the versatility of the method 20. For instance, the method 20 maybe performed to manufacture or shape pinions or cabochons. Further, the method 20 maybe beneficial for manufacturing grinding tools or the like, which usually require hard materials. The benefits, for instance, come from the high material removal rate that is possible with the method 20, or the fluid-jet 11 verticality possible with the apparatus 10. Further, the method 20 may be beneficial for manufacturing or shaping medical ceramics. The benefits, for instance, come from the high material removal rate that is possible with the method 20, or the sensitive treatment by the fluid-jet guided laser beam 12, particularly in the tangential orientation, of (heat) sensitive and/or fragile materials.

## Claims

1. A method (20) for machining a workpiece (30), wherein the method (20) is performed by an apparatus (10) providing a fluid-jet (11) guided laser beam (12), wherein the method (20) comprises turning (21, 22) the workpiece (30), and wherein turning (21, 22) the workpiece (30) comprises:
rotating (21) the workpiece (30) around an axis of rotation (31) during the machining; and
providing (22) the fluid-jet (11) guided laser beam (12) to a machined surface (32) of the workpiece (30).

2. The method (20) according to claim 1, wherein:
the fluid-jet (11) guided laser beam (12) is provided perpendicular onto the machined surface (32), or tangential to the machined surface (32), or substantially tangential to the machined surface (32).

3. The method (20) according to one of the claim 1 or 2, wherein:
the axis of rotation (31) is perpendicular to a propagation direction of the fluid-jet (11) guided laser beam (12) as provided by the apparatus (10).

4. The method (20) according to one of the claims 1 to 3, further comprising:
moving (23) the fluid-jet (11) guided laser beam (12) along a movement direction during turning (21, 22) the workpiece (30).

5. The method (20) according to claim 3 or 4, wherein:
the movement direction is parallel or perpendicular to the axis of rotation (31), and is perpendicular to the propagation direction of the fluid-jet guided (11) laser beam (12).

6. The method (20) according to claim 1 or 2, wherein:
the axis of rotation (31) is parallel to the fluid-jet (11) guided laser beam (12).

7. The method (20) according to one of the claims 1 to 6, wherein:
the laser beam (12) is pulsed; and
a rotational speed of rotating the workpiece (30) around the axis of rotation (31) is set such that consecutive pulses of the pulsed laser beam (12) overlap each other by at least 50% on the machined surface (32) of the workpiece (30).

8. The method (20) according to one of the claims 1 to 7, further comprising:
facetting (24) the workpiece (30), before turning (21, 22) the workpiece (30);
wherein facetting (24) the workpiece (30) comprises cutting off a set of pieces from the workpiece (30) with the fluid-jet (11) guided laser beam (12), to reduce a diameter of the workpiece (30) with respect to the axis of rotation (31).

9. The method (20) according to claim 8, wherein cutting off a piece from the workpiece (30) comprises:
cutting (81) into the workpiece (30) with the fluid-jet (11) guided laser beam (12);
rotating (82) the workpiece (30) by a certain angle around the axis of rotation (31); and
cutting again (83) into the workpiece (30) with the fluid-jet guided (11) laser beam (12), to cutout the piece from the workpiece (30).

10. The method (20) according to claim 9, wherein facetting (24) the workpiece (30) comprises:
cutting off a first subset of pieces from the workpiece (30), wherein the certain angle is a larger angle, to reduce the diameter of the workpiece (30) with respect to the axis of rotation (31); and
cutting off a second subset of pieces from the workpiece (30), wherein the certain angle is a smaller angle, to further reduce the diameter of the workpiece (30) with respect to the axis of rotation (31).

11. The method (20) according to one of the claims 8 to 10, further comprising:
performing an optimization algorithm based on a size and/or a shape of the workpiece (30) and regarding to a surface finish of the machined workpiece (30) and/or a process time of machining the workpiece (30); and
performing the facetting (24) and the turning (21, 22) of the workpiece (30) based on a result of the optimization algorithm.

12. The method (20) according to one of the claims 1 to 11, wherein a material of the workpiece (30) comprises at least one of:
diamond; a diamond composite; polycrystalline diamond; polycrystalline boron nitride; silicon carbide; a super-alloy; a ceramic; PHYNOX; titanium; a titanium alloy; a cobalt alloy; composite materials containing the previously mentioned materials.

13. The method (20) according to one of the claims 1 to 12, wherein the method (20) further comprises, in addition to turning (21, 22) the workpiece (30), at least one of:
straight deep cutting into the workpiece (30), drilling the workpiece (30), engraving the workpiece (30), and laser milling the workpiece (30), with the fluid-jet (11) guided laser beam (12).

14. The method (20) according to one of the claims 1 to 13, wherein:
the method (20) is performed automatically and/or seamlessly by the apparatus (10); and/or
the method (20) is performed by the apparatus (10) in a single process.

15. The method (20) according to one of the claims 1 to 14, wherein:
an arithmetic average roughness of the machined surface (32) of the machined workpiece (30) is 0.4 µm or less.

16. The method (20) according to one of the claims 1 to 15, wherein:
a diameter of the workpiece (30) is larger than 30 mm.

17. An apparatus (10) for machining a workpiece (30), the apparatus (10) comprising:
a machining unit (101) configured to provide a fluid-jet (11) guided laser beam (12);
a holder (102) configured to hold and rotate the workpiece (30); and
a control unit (103) configured to control the machining unit (101) and the holder (102), respectively, to turn (21, 22) the workpiece (30) and for turning (21, 22) the workpiece (30) to:
rotate (21) the workpiece (30) around an axis of rotation (31) during the machining; and
provide (22) the fluid-jet (11) guided laser beam (12) to a machined surface (32) of the workpiece (30).

18. The apparatus (10) according to claim 17, wherein:
the apparatus is configured to rotate the holder (102) to rotate (21) the workpiece (30) around two or three different axes of rotation (31), and to linearly displace the workpiece (30) along two or three axes; and/or
the control unit (103) is configured to control the holder (102) to synchronize a rotation of the workpiece (30) around one or more axes of rotation (31) with a linear displacement of the workpiece (30) along one or more axes.

19. A computer program comprising a program code either for controlling the apparatus (10) according to claim 17 or 18 when being performed by a processor, in particular a processor of the control unit (103), or for performing the method (20) according to one of the claims 1 to 16
